# EUROPEAN PATENT APPLICATION

(11) **EP 3 342 627 A1**
(43) Date of publication of application: **04.07.2018**
(21) Application number: 16207356.3
(22) Date of filing: 29.12.2016
(51) Int. Cl.: B60L 11/18, B60S 5/06, H02J 7/00

(54) **METHOD FOR PROLONGING ENDURANCE OF ELECTRIC VEHICLE AND ASSOCIATED MODULE**

(71) Applicant: Kentfa Advanced Technology Corp., Kaohsiung City 806 (TW)
(72) Inventor: Huang, Chih-Shu, 806 Qianzhen Dist., Kaohsiung City (TW)
(74) Representative: 2K Patentanwälte Blasberg Kewitz & Reichel

(57) **Abstract**

A method for prolonging endurance of an electric vehicle and an associated module are provided. Power is continually provided to an electric vehicle (2) by a fixed battery (30) to power driving of the electric vehicle (2), and power of a replacement battery (31) is charged to the fixed battery (30) through a charging unit (4). The above steps are repeated until the power of the replacement battery (31) is low or depleted, and the replacement battery (31) is then exchanged for another fully charged replacement battery (31) at a battery exchange station. Thus, the fixed battery (30) is continually charged by the replacement battery (31) to have the fixed battery (30) preserved with power for sustaining driving of the electric vehicle (2). Once the power of the replacement battery (31) is low or depleted, the replacement battery (31) is exchanged for another fully charged replacement battery (31) at a nearby battery exchange station. As such, the endurance of the electric vehicle (2) is prolonged.

## Description

### FIELD OF THE INVENTION

The present invention relates to a method for prolonging endurance and an associated module, and particularly to a method for prolonging endurance of an electric vehicle and an associated module.

### BACKGROUND OF THE INVENTION

In a convention method for prolonging the endurance of an electric vehicle, a fixed battery, a replacement battery and a switching unit for switching a powering mode are installed in the electric vehicle. The fixed battery refers in particular to a battery connectable to an external power source that charges the fixed battery. The replacement battery refers in particular to a battery that needs to be exchanged at a battery exchange station.

In a conventional operation approach, the electric vehicle is first powered by the fixed battery to allow driving of the electric vehicle to take place, and the switch unit then switches the powering mode to the replacement battery once the power of the fixed battery is depleted to sustain driving of the electric vehicle. When the power of the replacement battery becomes low of depleted, the replacement battery may be exchanged for another fully charged battery that immediately resumes driving of the electric vehicle. As such, the endurance of the electric vehicle is prolonged.

However, because the fixed battery cannot be charged in the battery exchange station, the power for sustaining driving of the electric vehicle relies solely on the replacement battery. If the location of a next battery exchange station is excessively distant, a user may encounter of dilemma of depleted power and being unable to head for a destination.

Although the conventional combination of the fixed battery and the replacement battery prolongs the endurance of the electric vehicle, its operation approach may cause user inconveniences. Therefore, there is a need for a solution for improving the conventional method for prolonging the endurance of an electric vehicle.

### SUMMARY OF THE INVENTION

It is an object of the present invention to provide an enhanced module for prolonging endurance of an electric vehicle and a method for prolonging the endurance of an electric vehicle, suited to overcome the above drawbacks.

This problem is solved by a module for prolonging endurance of an electric vehicle as claimed by claim 1 and by a method for prolonging the endurance of an electric vehicle as claimed by claim 6. Further advantageous embodiments are the subject-matter of the dependent claims.

According to the present invention there is provided a module for prolonging endurance of an electric vehicle, applicable to an electric vehicle. The module for prolonging the endurance of an electric vehicle includes a battery unit and charging unit. The battery unit includes a fixed battery installed at the electric vehicle and a replacement battery installed at the electric vehicle. The fixed battery provides power for driving of the electric vehicle, and is directly chargeable by an external power source connected to the electric vehicle. The replacement battery is a replacement battery that needs to be exchanged at a battery exchange station. The charging unit charges the power of the replacement battery to the fixed battery.

The present invention further provides an associated method for prolonging the endurance of an electric vehicle and applicable to an electric vehicle. The method for prolonging the endurance of an electric vehicle includes following steps.

In step 1, power needed by an electric vehicle is provided by a fixed battery to allow driving of the electric vehicle. The fixed battery is directly chargeable by an external power source connected to the electric vehicle.

In step 2, the fixed battery is charged by a replacement battery. The replacement battery is a replacement battery that needs to be exchanged at a battery exchange station.

In step 3, step 1 and step 2 are repeated until the power of the replacement battery is low or depleted.

In step 4, the replacement battery is exchanged for another fully charged replacement battery at a battery exchange station.

The present invention is characterized by the following features.

First of all, in the present invention, the fixed battery is continually charged by the replacement battery to provide the fixed battery with persistent power for powering driving of the electric vehicle. Once the power of the replacement battery is low or depleted, another fully charged replacement battery may be exchanged for at a battery exchange station, and the fully charged replacement battery exchanged is similarly used to charge the fixed battery. During a driving process, the fixed battery of the present invention is preserved with power for powering the driving of the vehicle, thereby achieving the effect of prolonging the endurance of the electric vehicle as well as eliminating a user dilemma of depleted power and being unable to head for a destination.

Secondly, after the fully charged replacement battery exchanged from the battery exchange station is obtained, the fixed battery may be charged by the replacement battery exchanged through the charging unit. Once the fixed battery is fully charged, yet another fully charged replacement battery may be exchanged for. Thus, two batteries, the fixed battery and the replacement battery, are available for driving of the electric vehicle, hence further prolonging the endurance of the electric vehicle.

### BRIEF DESCRIPTION OF THE DRAWINGS

Fig. 1 is a block diagram of a module for prolonging endurance of an electric vehicle of the present invention;
Fig. 2 is a flowchart of a method for prolonging endurance of an electric vehicle according to a first embodiment of the present invention;
Fig. 3 is a flowchart of a method for prolonging endurance of an electric vehicle according to a second embodiment of the present invention.

### DETAILED DESCRIPTION OF THE PREFERRED EMBODIMENTS

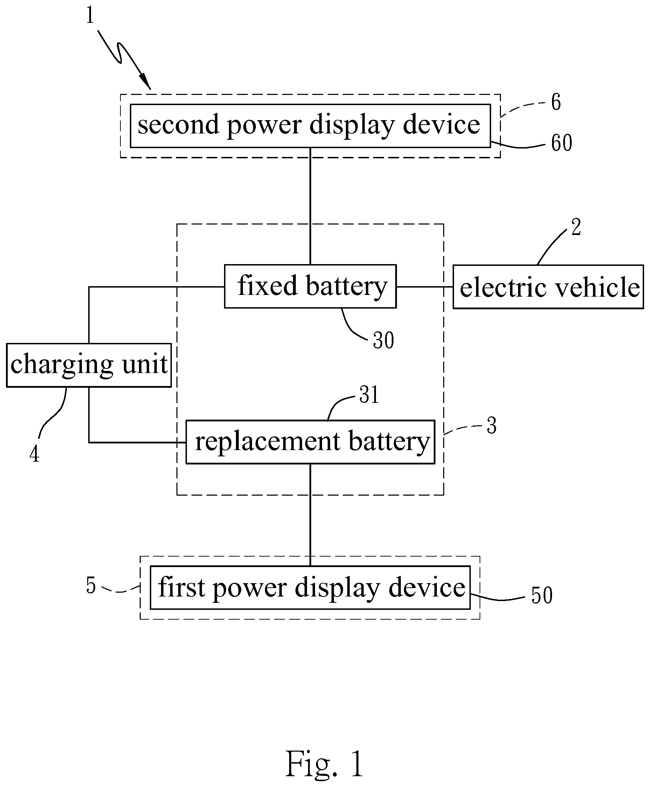

Fig. 1 shows a block diagram of a module 1 for prolonging the endurance of an electric vehicle and suitable for an electric vehicle 2. The module 1 for prolonging the endurance of an electric vehicle includes a battery unit 3 and a charging unit 4. The battery unit 3 includes a fixed battery 30 installed at the electric vehicle 2, and a replacement battery 31 installed at the electric vehicle 2. The fixed battery 30 directly provides power for driving of the electric vehicle 2, and may be directly chargeable by an external power source connected to the electric vehicle 2. The replacement battery 31 is a replacement battery that needs to be exchanged at a battery exchange station. The charging unit 4 charges the power of the replacement battery 31 to the fixed battery 30.

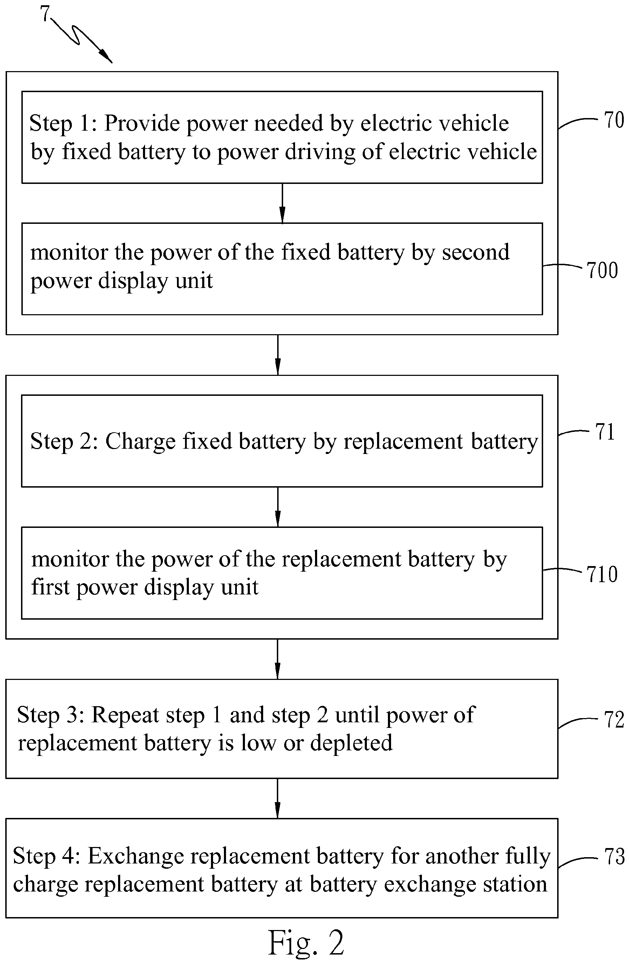

Referring to Fig. 2, the present invention further provides a method 7 for prolonging the endurance of an electric vehicle based on the module 1 for prolonging the endurance of an electric vehicle. The method 7 for prolonging the endurance of an electric vehicle includes following steps.

In step 1 (70), power needed by the electric vehicle 2 is provided by the fixed battery 30 to allow driving of the electric vehicle 2.

In step 2 (71), the fixed battery 30 is charged by the replacement battery 31. The power of the replacement battery 31 is charged to the fixed battery 30 through the charging unit 4.

In step 3 (72), step 1 (70) and step 2 (71) are repeated until the power of the replacement battery 31 is low or depleted.

In step 4 (73), the replacement battery 31 is exchanged for another fully charged replacement battery 31 at a battery exchange station.

More specifically, the fixed battery 30 continually provides the electric vehicle 2 with power for driving of the electric vehicle 2. Meanwhile, the replacement battery 31 continually charges the fixed battery 30 through the charging unit 4, such that the fixed battery 30 contains a certain level of power for powering driving of the electric vehicle 2. Once the power of the replacement battery 31 is low or depleted, the replacement battery 31 is exchanged for another fully charged replacement battery 31 at a nearby battery exchange station, and the replacement battery 31 exchanged similarly charges the fixed battery 30 through the charging unit 4.

Because the replacement battery 31 continually charges the fixed battery 30 to allow the fixed battery 30 to be preserved with power during the driving process and to sustain driving of the electric vehicle 2, not only the effect of prolonging the endurance of the electric vehicle 2 is achieved but also a risk of a user dilemma of depleted power and being unable to head for a destination is eliminated. In other words, although the present invention similarly powers the electric vehicle 2 by the fixed battery 30, an additional distinct technical means of the present invention is that, the fixed battery 30 is further charged by the replacement battery 31. In comparison, in the prior art, the electric vehicle relies solely on the power of the replacement battery once the power of the fixed battery is depleted, and a dilemma of no available power for the electric vehicle may be resulted.

Further, after the fully charged replacement battery 31 exchanged at a battery exchange station is obtained, the fixed battery 30 is first charged by the fully charged replacement battery 31 exchanged through the charging unit 4, and yet another fully charged replacement battery 31 may then be exchanged for after the fixed battery 30 is fully charged. Thus, the electric vehicle 2 is provided with two sets of fully charged batteries including the fixed battery 30 and the replacement battery 31, hence further prolonging the endurance of the electric vehicle 2.

The module 1 for prolonging the endurance of an electric vehicle further includes a first power display unit 5. The first power display unit 5 includes a first power display device 50, and step 2 (71) further includes a sub-step (710) of monitoring power of the replacement battery 31 by the first power display unit 5. The first power display unit 5 is electrically connected to the replacement battery 31 to display a power level of the replacement battery 31. Once the power of the replacement battery 31 is low or depleted, the user may immediately head for a battery exchange station to exchange for another fully charged replacement battery 31. For example, the first power display device 50 is a liquid crystal display (LCD), a light emitting diode (LED) display or a pointer display.

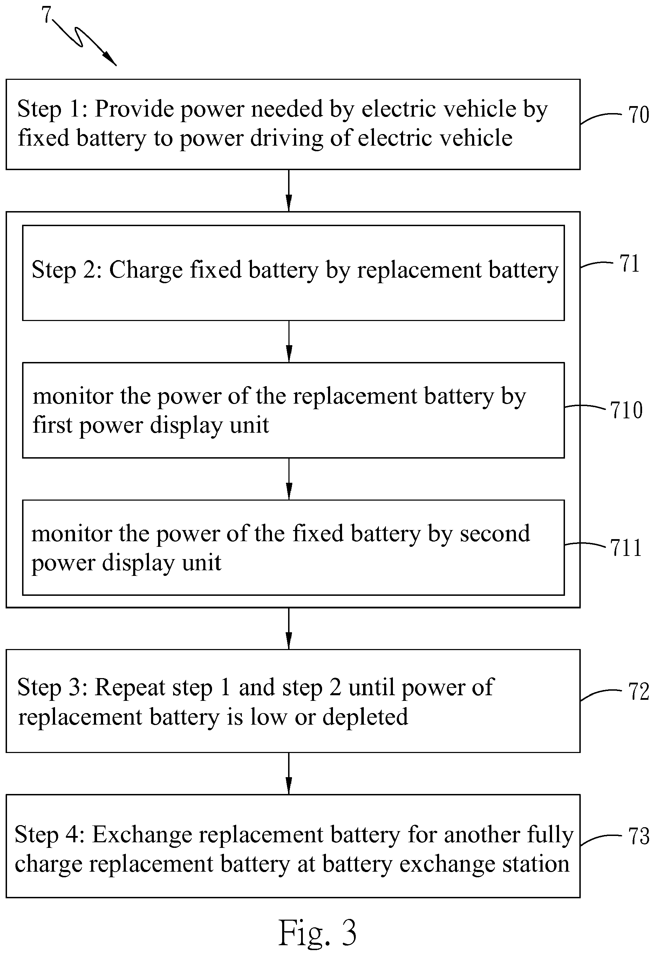

In another embodiment, the module 1 for prolonging the endurance of an electric vehicle further includes a second power display unit 6, and step 1 (70) further includes a sub-step (700) of monitoring power of the fixed battery 30 by the second power display unit 6. Alternatively, the process of monitoring the power of the fixed battery 30 may be performed in step 2 (71) (as shown in Fig. 3), and so step 2 (71) further includes a sub-step (711) of monitoring the power of the fixed battery 30 by the second power display unit 6. The second power display unit 6 includes a second power display device 60, which is electrically connected to the fixed battery 30 to display a power level of the fixed battery 30. The user may determine whether to immediately head for a battery exchange station to exchange for the fully charged replacement battery 31 only according to the power of the replacement battery 31, or according to both of the power of the fixed battery 30 and the power of the replacement battery 31. The second power display device 60 may be an LCD, an LED display or a pointer display.

In conclusion, in the present invention, the replacement battery 31 continually charges the fixed battery 30, such that the fixed battery 30 is preserved with power for sustaining driving of the electric vehicle 2. Once the power of the replacement battery 31 is low or depleted, another fully charged replacement battery 31 can be exchanged for at a nearby battery exchange station. The fully charged replacement battery 31 exchanged similarly charges the fixed battery 30 through the charging unit 4. During the driving process, because the fixed battery 30 of the present invention is preserved with power for powering driving of the electric vehicle 2, not only the effect of prolonging the endurance of the electric vehicle 2 is achieved but also a user dilemma of depleted power and being unable to head for a destination is eliminated. Further, the electric vehicle 2 of the present invention includes any electric motor bikes, electric automobiles, electric bicycles and other types of electric vehicles powered by batteries.

## Claims

**1.** A module (1) for prolonging endurance of an electric vehicle, applicable to an electric vehicle (2), the module (1) for prolonging endurance of an electric vehicle comprising:
a battery unit (3), comprising a fixed battery (30) installed at the electric vehicle (2) and a replacement battery (31) installed at the electric vehicle (2); wherein, the fixed battery (30) provides the electric vehicle (2) with power for driving of the electric vehicle (2), and is directly chargeable by an external power source connected to the electric vehicle (2), and the replacement battery (31) is a battery that needs to be exchanged at a battery exchange station; and
a charging unit (4), charging power of the replacement battery (31) to the fixed battery (30).

**2.** The module (1) for prolonging endurance of an electric vehicle of claim 1, further comprising a first power display unit (5), which comprises a first power display device (50) electrically connected to the replacement battery (31).

**2.** The module (1) for prolonging endurance of an electric vehicle of claim 2, wherein the first power display device (50) is a liquid crystal display (LCD), a light emitting diode (LED) display, or a pointer display.

**4.** The module (1) for prolonging endurance of an electric vehicle of any of claims 1 to 3, further comprising a second power display unit (6), which comprises a second power display device (60) electrically connected to the fixed battery (30).

**5.** The module (1) for prolonging endurance of an electric vehicle of claim 4, wherein the second power display device (60) is a liquid crystal display (LCD), a light emitting diode (LED) display, or a pointer display.

**6.** A method for prolonging endurance of an electric vehicle, applicable to an electric vehicle (2), particularly for use in a module (1) for prolonging endurance of an electric vehicle of as claimed in any of the preceding claims, the method for prolonging endurance of an electric vehicle comprising the steps of:
Step 1 (70): providing power needed by the electric vehicle (2) by a fixed battery (30) to power driving of the electric vehicle (2); wherein, the fixed battery (30) is a directly chargeable by an external power source connected to the electric vehicle (2);
Step 2 (71) charging the fixed battery (30) by a replacement battery (31); wherein, the replacement battery (31) is a battery (31) that needs to be exchanged at a battery exchange station;
Step 3 (72) repeating step 1(70) and step 2(71) until power of the replacement battery (31) is low or depleted; and
Step 4 (73): exchanging the replacement battery (31) with low or depleted power for another fully charged replacement battery (31) at the battery exchange station.

**7.** The method for prolonging endurance of an electric vehicle of claim 6, wherein step 2 (71) further comprises a sub-step (710) of:
monitoring the power of the replacement battery (31) by a first power display unit (5), the first power display unit (5) comprising a first power display device (50) electrically connected to the replacement battery (31).

**8.** The method for prolonging endurance of an electric vehicle of claim 7, wherein the first power display device (50) is a liquid crystal display (LCD), a light emitting diode (LED) display, or a pointer display.

**9.** The method for prolonging endurance of an electric vehicle of any of claims 6 to 8, wherein step 1 (70) or step 2 (71) further comprises a sub-step (711) of: monitoring the power of the fixed battery (30) by a second power display unit (6), the second power display unit (6) comprising a second power display device (60) electrically connected to the fixed battery (30).

**10.** The method for prolonging endurance of an electric vehicle of claim 9, wherein the second power display device (60) is a liquid crystal display (LCD), a light emitting diode (LED) display, or a pointer display.
